# EUROPÄISCHE PATENTSCHRIFT

(11) **EP 1 907 194 B1**
(45) Veröffentlichungstag und Bekanntmachung des Hinweises auf die Patenterteilung: **26.05.2010**
(21) Anmeldenummer: 06792553.7
(22) Anmeldetag: 24.07.2006
(51) Int. Cl.: B29C 70/38, B29B 11/16

(54) **FÜHRUNGSMITTEL FÜR EINE VORRICHTUNG ZUR HERSTELLUNG VON FASERVORFORMLINGEN IM TFP-VERFAHREN FÜR VERBUNDBAUTEILE**
GUIDING SYSTEM OF A DEVICE FOR PRODUCING FIBRE PREFORMS FOR COMPOSITE COMPONENTS IN A TFP METHOD
SYSTEME DE GUIDAGE POUR UN DISPOSITIF PERMETTANT DE PRODUIRE DES PREFORMES FIBREUSES DANS LE CADRE D'UN PROCEDE TFP POUR DES COMPOSANTS COMPOSITES

(30) Priorität: 22.07.2005 DE 102005034403
(43) Veröffentlichungstag der Anmeldung: 09.04.2008
(73) Patentinhaber: Airbus Deutschland GmbH, 21129 Hamburg (DE)
(72) Erfinder: JÖRN, Paul, 22763 Hamburg (DE); EBERTH, Ulrich, 86641 Rain (DE)
(74) Vertreter: Peckmann, Ralf
(86) Internationale Anmeldenummer: PCT/EP2006/064580
(87) Internationale Veröffentlichungsnummer: WO 2007/010054

(56) Entgegenhaltungen:
- DE-A1- 10 301 646
- GB-A- 2 041 489

## Beschreibung

Die Erfindung betrifft ein Führungsmittel für eine Vorrichtung zur Herstellung von Faservorformlingen im TFP-Verfahren ("Tailored Fiber Placement") für Verbundbauteile durch Ablegen und Anheften eines Faserstrangs auf einer Tragschicht mit einer nahezu beliebigen Bahnkurve, wobei das Führungsmittel im Wesentlichen zur Führung des Faserstrangs dient.

Im Leichtbau, insbesondere im Flugzeugbau als auch in der Raumfahrt, werden für tragende Konstruktionskomponenten zunehmend faserverstärkte Verbundbauteile eingesetzt, die aufgrund ihrer hohen Festigkeit bei einer gleichzeitig geringen Masse ein hohes Gewichtseinsparungspotential aufweisen.

Die Ausrichtung der Verstärkungsfasern im fertigen Verbundbauteil hat dabei einen entscheidenden Einfluss auf die erreichbare Steifigkeit und Festigkeit. Die Verstärkungsfasern sollten möglichst der Belastungsrichtung folgen, keine Welligkeiten aufweisen und gleichmäßig beansprucht sein.

Mit konventionellen Halbzeugen, wie zum Beispiel Geweben oder Gelegen, sind nicht alle denkbaren Faserorientierungen realisierbar, da die Verstärkungsfasern dort immer in einer bestimmten Orientierung fixiert sind. So sind vereinzelt in einigen konventionellen Halbzeugen beispielsweise alle Orientierungen von Verstärkungsfasern zwischen 0° und 360° mit einer jeweils ungefähr gleichen Wahrscheinlichkeit vertreten, sodass sich hiermit nur Verbundbauteile effektiv verstärken lassen, die im Wesentlichen in allen Richtungen des Raums - "quasi isotrop" - denselben mechanischen Beanspruchungen ausgesetzt sind.

Bei einer auf Torsion beanspruchten Kreisscheibe folgt der Kraftverlauf jedoch bestimmten Evolventen, die somit den optimalen Faserverlauf anzeigen. In diesem Fall ist beispielsweise eine flächendeckende Ablage der Verstärkungsfasern alternierend unter Winkeln von +45° und -45° erforderlich, wobei die Bauteildicke am inneren Rand größer als am äußeren Rand sein sollte, da dort die höchsten Belastungen auftreten. Diese Faserorientierungen lassen sich folglich nicht mit konventionellen Matten oder Geweben aus Verstärkungsfasern bilden.

Eine Möglichkeit dieser Forderung nach einer belastungsgerechten Faserlage nachzukommen ist das so genannte TFP-Verfahren ("Tailored Fiber Placement"). Hierbei wird mindestens ein Faserstrang entlang einer beliebigen Bahnkurve abgelegt und mit Hilfe eines Heftfadens auf einer Tragschicht fixiert, wodurch die Lage und Orientierung der einzelnen Verstärkungsfasern in einem so gebildeten Faservorformling in nahezu idealer Weise dem im späteren Verbundbauteil vorherrschenden Kraftfluss angepasst werden kann. Der oder die abzulegenden Faserstränge ("Rovings") sind hierbei mit einer Vielzahl von parallel zueinander verlaufenden einzelnen Verstärkungsfasern ("Filamenten") gebildet. Die einzelnen Verstärkungsfasern können beispielsweise mit Glasfasern, Kohlefasern, Aramidfasern oder dergleichen gebildet sein.

Der Faserstrang wird möglichst flach abgelegt, um eine hohe Packungsdichte im Faservorformling zu erreichen. Die minimal abzulegende Schichtdicke ist durch die Dicke des Faserstrangs beschränkt. Über die Anzahl der abgelegten Lagen mit Fasersträngen lässt sich die Dicke des Faservorformlings bzw. des fertigen Bauteils einstellen. Die maximale Anzahl der übereinander anzuordnenden Lagen ist hierbei im Wesentlichen durch die Länge der im TFP-Verfahren benutzten Nadel begrenzt. Die Zuführung der Faserstränge erfolgt mittels eines Führungsmittels ("Lever") im Wesentlichen tangential zur Bahnkurve und zur Tragschicht, auf der der Faservorformling durch Ablegen der Faserstränge in mehreren Lagen aufgebaut wird.

Die Fertigung der Faservorformlinge aus Fasersträngen im TFP-Verfahren erfolgt mit bekannten Vorrichtungen, insbesondere mit modernen, rechnergesteuerten Näh- bzw. Stickautomaten. Derartige Vorrichtungen zur Durchführung des TFP-Verfahrens weisen im Allgemeinen einen Nähkopf auf, der in zwei Dimensionen des Raumes rechnergesteuert frei positionierbar ist. Weiterhin ist im Bereich des Nähkopfes das Führungsmittel für den abzulegenden Faserstrang angeordnet. Sind alle erforderlichen Lagen von Fasersträngen abgelegt, wird der fertige Faservorformling aus der Tragschicht herausgeschnitten und beispielsweise mittels des bekannten RTM-Verfahrens ("Resin Transfer Moulding") zu einem fertigen Verbundbauteil mit einem aushärtbaren Kunststoffmaterial imprägniert und ausgehärtet. Als aushärtbares Kunststoffmaterial finden zum Beispiel Epoxydharze, Polyesterharze oder dergleichen Anwendung.

Nachteilig bei den bekannten Vorrichtungen zur Durchführung des TFP-Verfahrens ist, dass das für die Ablage des Faserstrangs auf der Tragschicht benutzte Führungsmittel eine Durchlassöffnung mit einer unveränderlichen Querschnittsgeometrie aufweist. Hierdurch kann der Faserstrang, der über eine in der Regel in etwa rechteckförmige Querschnittsgeometrie verfügt, immer nur mit derselben Querschnittsgeometrie, das heißt mit einer konstanten Breite bzw. Höhe abgelegt werden. Hieraus ergibt sich unter Umständen eine, über die Gesamtfläche des Faservorformlings nicht ganz gleichmäßige Bauteildicke durch unerwünschte lokale Abweichungen der Materialstärke des Faservorformlings. Beispielsweise können derartige Bauteilaufdickungen im Bereich von kleineren Ablageradien des Faserstrangs entstehen, da die Höhe des Faserstrangs bei einer Verlegung mit kleinen Radien erhöht wird.

Aus der DE 101 23 064 A1 ist ein Verfahren zur Herstellung einer dreidimensionalen TFP-Preform mit einer bevorzugt kraftflussgerechten Faserausrichtung bekannt gemäß dem Oberbegriff des Anspruchs 1.
Im Zuge des aus der Druckschrift E1 bekannten Verfahrens wird eine in einer Vielzahl von Schlaufen abgelegte Verstärkungsfaser bzw. ein Verstärkungsfaserstrang ("Roving") mittels eines Nähfadens auf der Oberfläche eines Schaumstoffblocks zur Bildung der TFP-Preform aufgetuftet (aufgeheftet). Nach dem Fixieren der TFP-Preform mittels eines Binders wird die TFP-Preform von dem Schaumstoffblock abgezogen und mit einem aushärtbaren Kunststoffmaterial zur Herstellung eines fertigen Verbundbauteils imprägniert. Von Nachteil bei diesem Verfahren ist, dass der Verstärkungsfaserstrang in immer gleicher Breite abgelegt wird, was insbesondere bei kleinen Verlegeradien zu unerwünschten Dickenschwankungen führt.

Aus der JP 6-210 751 A ist zwar eine Vorrichtung zur variablen Querschnittsveränderung eines Verstärkungsfaserstrangs bekannt, wobei der Verstärkungsfaserstrang bereits mit einem aushärtbaren Kunststoffmaterial vorimprägniert ist (sog. "Prepreg"-Material). Um die Querschnittsgeometrie des Verstärkungsfaserstrangs verändern zu können, wird der Verstärkungsfaserstrang durch einen Führungsrahmen mit einer viereckigen Querschnittsgeometrie geleitet, dessen Innenwandflächen jeweils durch ein umlaufendes Förderband gebildet werden. Durch die Förderbänder wird ein Anhaften des vorimprägnierten Verstärkungsfaserstrangs im Führungsrahmen verhindert. Mindestens drei der insgesamt vier Förderbänder sind quer zu einer Längsachse des Verstärkungsfaserstrangs verschiebbar ausgebildet, so dass die Querschnittsgeometrie des Verstärkungsfaserstrangs variiert werden kann. Vor dem Führungsrahmen sind eine Höhenregulierung und eine Breitenregulierung zur Führung des Verstärkungsfaserstrangs angeordnet. Von Nachteil bei dieser Ausgestaltung ist deren aufwändige Konstruktion mit mehreren Förderbändern zur Führung und Formung des Verstärkungsfaserstrangs durch eine Querschnittsgeometrieveränderung, wobei die Laufbänder zudem senkrecht zu einer Längsachse des Verstärkungsfaserstrangs verschiebbar ausgebildet sind, so dass eine unmittelbare Anordnung der aus der JP 6 210 751 A bekannten Vorrichtung an einem für den TFP-Prozess benutzten Nähkopf erschwert wird.

Aufgabe der Erfindung ist es, die vorstehend beschriebenen Nachteile der bekannten Ausführungsformen von Führungsmitteln für Vorrichtungen zur Durchführung des TFP-Verfahrens zu vermeiden und ein Führungsmittel zu schaffen, das eine Variation der Querschnittsgeometrie des Verstärkungsfaserstrangs erlaubt und das zudem aufgrund eines vereinfachten konstruktiven Aufbaus zur Anordnung im Bereich eines für den TFP-Prozess benutzten Nähkopfes geeignet ist.

Diese Aufgabe wird durch ein Führungsmittel mit den kennzeichnenden Merkmalen des Patentanspruchs 1 gelöst.

Dadurch, dass das Führungsmittel eine Durchlassöffnung mit einer variablen Querschnittsgeometrie zur Durchführung des Faserstrangs aufweist, wobei das Führungsmittel im Bereich eines Nähkopfes der Vorrichtung zur Durchführung des TFP-Verfahrens anbringbar ist,
kann beispielsweise eine Breite des abzulegenden Faserstrangs in Abhängigkeit vom aktuellen Krümmungsradius der Bahnkurve variiert werden.

Eine weitere vorteilhafte Ausgestaltung des erfindungsgemäßen Führungsmittels sieht vor, dass die Durchlassöffnung zumindest abschnittsweise gekrümmt, insbesondere elliptisch, oval oder kreisförmig, ausgebildet ist
Hierdurch wird ein Verklemmen des Faserstrangs innerhalb der so gebildeten, hülsenartigen Durchlassöffnung weitgehend vermieden.

Nach Maßgabe einer vorteilhaften Ausgestaltung des erfindungsgemäßen Führungsmittels ist die Durchlassöffnung im Wesentlichen viereckig ausgebildet.
Hierdurch lässt sich die Variation der Querschnittsgeometrie der Durchlassöffnung konstruktiv relativ leicht realisieren.

Eine weitere vorteilhafte Ausgestaltung des Führungsmittels sieht vor, dass eine Breite und/oder eine Höhe der Durchlassöffnung variierbar ist.
Mittels dieser Ausgestaltung ist es möglich, die Querschnittsgeometrie der Durchlassöffnung beispielsweise allein durch eine Veränderung der Breite der Durchlassöffnung zu variieren.

Gemäß einer weiteren vorteilhaften Ausführungsform des Führungsmittels ist vorgesehen, dass in Bahnkurvenabschnitten mit kleinen Krümmungsradien die Breite der Durchlassöffnung vergrößerbar und/oder die Höhe der Durchlassöffnung verringerbar ist, um unerwünschte Aufdickungen des Faservorformlings in diesen Bahnkurvenabschnitten zu vermeiden.
Hierdurch ergibt sich insgesamt eine gleichmäßigere Verteilung der Materialstärke des Faservorformlings, die nahezu in allen Bereichen der Bahnkurve im Wesentlichen einem Vorgabewert für die Materialstärke entspricht.

Weitere vorteilhafte Ausgestaltungen der Anordnung sind in den weiteren Patentansprüchen dargelegt.

In der Zeichnung zeigt:

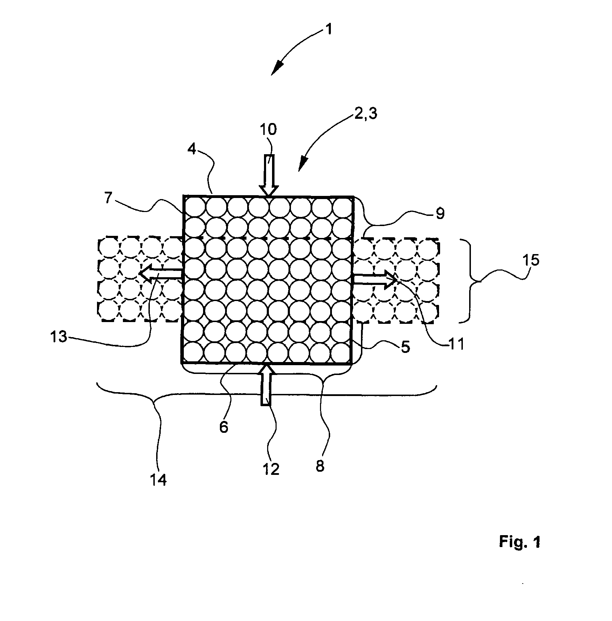

- Fig. 1: Eine Darstellung des Führungsmittels,

Die Fig. 1 zeigt eine schematische Darstellung einer ersten Ausführungsvariante des erfindungsgemäßen Führungsmittels 1, das einen Teil einer nicht dargestellten Vorrichtung zur Durchführung des TFP-Verfahrens darstellt.

Die Vorrichtung zur Durchführung des TFP-Verfahrens weist einen mittels einer Steuer- und Regeleinrichtung in vorzugsweise zwei Raumdimensionen frei positionierbaren Nähkopf auf. Vorzugsweise im Bereich des Nähkopfes oder unmittelbar am Nähkopf ist das erfindungsgemäße Führungsmittel 1 zur Führung des auf der Tragschicht abzulegenden Faserstrangs angeordnet. Kontrolliert von der Steuer- und Regeleinrichtung lässt sich der Faserstrang in nahezu beliebigen Bahnkurven auf der Tragschicht ablegen und mittels des Nähkopfes durch Fixierfäden anheften, so dass sich Faservorformlinge mit einer im Wesentlichen kraftflussgerechten Orientierung der Verstärkungsfasern bilden lassen. Die Lage der Faserstränge im Raum wird hierbei durch Anheften mit Fixierfäden auf der Tragschicht gesichert, so dass sich der Faservorformling aus der Vorrichtung zur Durchführung des TFP-Verfahrens herausnehmen lässt und sich beispielsweise durch Einlegen in eine verschließbare Form und anschließendes Imprägnieren bzw. Durchtränken mit einem aushärtbaren Kunststoffmaterial zu einem fertigen Verbundbauteil aushärten lässt. Das Imprägnieren und anschließende Aushärten mit dem aushärtbaren Kunststoffmaterial bzw. einem durch Vernetzung aushärtbaren Harzsystem, insbesondere einem Epoxydharz, einem Polyesterharz, einem BMI-Harz oder dergleichen, kann beispielsweise mittels des bekannten RTM-Verfahrens ("Resin-Moulding-Transfer") erfolgen.

Das Führungsmittel 1 weist eine Durchlassöffnung 2 zur Führung und Durchleitung eines Faserstrangs 3 auf. Die Durchlassöffnung 2 ist hierbei durch die Längsseiten 4 bis 7 gebildet. Der Faserstrang 3 ist mit einer Vielzahl von einzelnen Verstärkungsfasern gebildet, die der besseren zeichnerischen Übersicht nicht mit Bezugsziffern versehen sind, sondern durch Kreise angedeutet sind. Die Längsachsen der einzelnen Verstärkungsfasern laufen hierbei senkrecht zur Zeichenebene. Die Verstärkungsfasern können beispielsweise mit Kohlefasern, Glasfasern, Aramidfasern oder dergleichen aufgebaut sein. In der mit der durchgezogenen schwarzen Linie dargestellten Position des Führungsmittels 1 bilden die Längsseiten 4 bis 7 eine Durchlassöffnung 2 mit einer quadratischen Querschnittsgeometrie. Entsprechend sind eine Breite 8 und eine Höhe 9 des Führungsmittels 1 in diesem Zustand im Wesentlichen gleich.

Die Verstärkungsfasern des Faserstrangs 3 füllen die Durchlassöffnung 2 nahezu vollständig aus und werden durch die Längsseiten 4 bis 7 geführt. Der Faserstrang 3 darf hierbei nicht zu fest an den Längsseiten 4 bis 7 anliegen, um ein Verklemmen innerhalb des Führungsmittels 1 zu vermeiden.

In dieser ersten Position wird der Faserstrang 3 mit der höchstmöglichen Dicke, das heißt in etwa mit der Höhe 9 auf der Tragschicht abgelegt. Bewegt sich der Nähkopf beispielsweise in einem Bahnkurvenabschnitt, der einen kleineren Krümmungsradius aufweist, so ist es wünschenswert, die abzulegende Höhe 9 des Faserstrangs 3 zu verringern bzw. die Breite zu erweitern, um unerwünschte Aufdickungen in diesem Bereich zu verhindern. Weiterhin sind andere Einflussfaktoren denkbar, beispielsweise die Umgebungstemperatur, die Durchlaufgeschwindigkeit des Faserstrangs 3 oder dergleichen, bei denen es sinnvoll erscheint, die Höhe 9 des Führungsmittels 1 und damit die Dicke des Faserstrangs zu verringern.

Zu diesem Zweck können die Längsseiten 4 bis 7 mittels nicht näher dargestellter Stellmittel in Richtung der Pfeile 10 bis 13 in eine gestrichelt dargestellte zweite Position verfahren werden. Hierdurch vergrößert sich die Breite 8 auf eine Breite 14 und die Höhe 9 verringert sich auf die Höhe 15, wobei der Flächeninhalt des durch die Längsseiten 4 bis 7 aufgespannten Vierecks vorzugsweise jedoch in etwa unverändert bleibt, so dass immer ungefähr dieselbe Anzahl von Verstärkungsfasern durch das Führungsmittel 1 geleitet werden kann. Die mit der durchgezogenen Linie und mit der gestrichelten Linie symbolisierten ersten und zweiten Positionen des Führungsmittels stellen lediglich Endpositionen dar. Zwischen der ersten und der zweiten Position sind eine Vielzahl von Zwischenpositionen möglich. Weiterhin ist es nicht erforderlich, dass die Breite 8 und die Höhe 9 des Führungsmittels 1 gleichzeitig verändert wird. Es kann auch nur eine Verstellbarkeit der Breite 8 in Richtung der Pfeile 11,13 oder nur eine Verstellbarkeit der Höhe 9 des Führungsmittels 1 in Richtung der Pfeile 10,12 erfolgen.

Aus der Darstellung der Fig. 1 ergibt sich in diesem Zusammenhang auch, dass die Querschnittsfläche der Durchlassöffnung 2 im Wesentlichen konstant ist, da die Anzahl der Kreise in der mit der durchgezogenen Linie dargestellten ersten Position des Führungsmittels 1 (quadratische Durchlassöffnung) gleich der Anzahl der Kreise in der mit der gestrichelten Linie wiedergegebenen zweiten Position des Führungsmittels 1 (rechteckige Durchlassöffnung) ist.

Weiterhin ist es nicht erforderlich, dass die Verstärkungsfasern des Faserstrangs 3 allseitig von den Längsseiten 4 bis 7 umschlossen werden. Es kann vielmehr vorgesehen sein, dass zwischen dem Faserstrang 3 und der Längsseite 4 ein Leerraum besteht. Hierdurch wird die Wahrscheinlichkeit verringert, dass sich der Faserstrang 3 bzw. einzelne, den Faserstrang 3 bildende Verstärkungsfasern (Filamente) in der Durchlassöffnung 2 des Führungsmittels 1, insbesondere in den Eckbereichen des durch die Längsseiten 4 bis 7 aufgespannten Vierecks, verklemmen.

Die Stellmittel können mechanisch, elektrisch, pneumatisch, hydraulisch, thermisch oder auf andere Art und Weise wirken. Die Bewegung der Stellmittel in Richtung der Pfeile 10 bis 13 wird hierbei von einer nicht dargestellten Steuer- und Regeleinrichtung kontrolliert. Die Steuer- und Regeleinrichtung, beispielsweise in der Form einer bekannten CNC-Steuerung, kontrolliert vorzugsweise gleichzeitig die Position des Nähkopfes in mindestens zwei Dimensionen des Raumes, also beispielsweise in der xy-Ebene. Diese Ausgestaltung hat den Vorteil, dass ein kleiner Krümmungsradius der Bahnkurve von der Steuer- und Regeleinrichtung unverzüglich aufgrund der aktuellen Bahnkoordinaten der Bahnkurve des Nähkopfes ermittelt werden kann, so dass die Anpassung der Querschnittsgeometrie der Durchlassöffnung 2 durch ein entsprechendes Verfahren der Längsseiten 4 bis 7 mittels der Stellmittel veranlasst wird.

Die Stellmittel können beispielsweise als elektromotorisch angetriebene Getriebespindeln oder dergleichen ausgebildet sein, deren Verfahrwege mittels der Steuer- und Regeleinrichtung kontrollierbar sind. Das Führungsmittel 1 ist hierbei bevorzugt so ausgebildet, dass es im Bereich eines Nähkopfes oder unmittelbar an einem Nähkopf einer Vorrichtung zur Durchführung des TFP-Verfahrens mittels standardisierter Anschluss- bzw. Verbindungselemente leicht anbringbar bzw. austauschbar ist. Erforderlichenfalls muss hierzu ein bereits an der Vorrichtung vorhandenes Führungsmittel mit einer nicht variablen Durchlassöffnung demontiert werden.

In einer zweiten, nicht dargestellten Ausführungsvariante des Führungsmittels kann die Durchlassöffnung zumindest abschnittsweise gekrümmt sein. In diesem Fall weist die Durchlassöffnung beispielsweise eine kreisförmige, eine elliptische oder eine ovale Querschnittsgeometrie auf. Durch diese Ausgestaltung ergibt sich insbesondere der Vorteil, dass sich der durchlaufende Faserstrang 3 nicht in den Eckebereichen einer eckigen Durchlassöffnung nach Maßgabe der ersten Ausführungsvariante verklemmen kann (vgl. Fig. 1). Zur Schaffung eines Führungsmittels mit einer gekrümmten Durchlassöffnung bzw. einer derartigen Führungshülse können beispielsweise beide Enden eines elastischen Materialstreifens miteinander verbunden werden, so dass ein Führungsmittel bzw. eine Führungshülse mit einer im Grundzustand im Wesentlichen ringförmigen Querschnittsgeometrie entsteht. Als elastische Materialstreifen kommen beispielsweise Metallstreifen, Kunststoffstreifen oder dergleichen in Betracht. Alternativ kann auch ein elastisches Rundmaterial verwendet werden.

An der Außenfläche des Materialstreifens greifen beispielsweise vier, jeweils um 90° versetzt angeordnete Stellmittel an, mittels derer die Querschnittsgeometrie der so gebildeten, im Grundzustand - dass heißt im entspannten Zustand - im Wesentlichen ringförmigen Durchlassöffnung, kontrolliert von der Steuer- und Regeleinrichtung, durch das Verfahren der Stellmittel variierbar ist. Drücken beispielsweise das obere und das untere Stellmittel den elastischen Materialstreifen zusammen, während die linksseitig und rechtsseitig angeordneten Stellmittel gleichzeitig den Materialstreifen auseinander ziehen, lässt sich beispielsweise eine Durchlassöffnung mit einer elliptischen Querschnittsgeometrie schaffen, deren Breite größer ist als deren Höhe.

Alternativ ist es möglich, anstatt der externen Stellmittel dem Materialstreifen selbst zumindest bereichsweise aktuatorische Fähigkeiten zu verleihen. Beispielsweise können auf der Außenfläche des Materialstreifens piezoelektrische Aktuatoren, Aktuatoren mit "Memory"-Metallen" oder dergleichen aufgebracht werden. Wird der Materialstreifen beispielsweise mit einem Metallstreifen gebildet, so können die Memory-Metalle zur Bildung der Aktuatoren auch unmittelbar in den Metallstreifen integriert werden, das heißt der Metallstreifen wird zumindest abschnittsweise mit geeigneten "Memory"-Metallen" gebildet. Diese Ausgestaltung hat den Vorteil einer sehr kompakten Bauform und erlaubt darüber hinaus eine sehr schnelle und weitgehend verzögerungsfreie Variation der Querschnittsgeometrie der Durchlassöffnung.

### Bezugszeichenliste

- 1: Führungsmittel
- 2: Durchlassöffnung
- 3: Faserstrang
- 4: Längsseite
- 5: Längsseite
- 6: Längsseite
- 7: Längsseite
- 8: Breite
- 9: Höhe
- 10: Pfeil
- 11: Pfeil
- 12: Pfeil
- 13: Pfeil
- 14: Breite
- 15: Höhe

## Patentansprüche

1. Führungsmittel (1) für eine Vorrichtung zur Herstellung von Faservorformlingen im Tailored Fiber Placement oder TFP-Verfahren für Verbundbauteile durch Ablegen und Anheften eines Faserstrangs (3) auf einer Tragschicht mit einer nahezu beliebigen Bahnkurve, wobei das Führungsmittel (1) im Wesentlichen zur Führung des Faserstrangs (3) dient, **dadurch gekennzeichnet, dass** das Führungsmittel eine Durchlassöffnung (2) mit einer variablen Querschnittsgeometrie zur Durchführung des Faserstrangs (3) aufweist, wobei das Führungsmittel (1) im Bereich eines Nähkopfes der Vorrichtung zur Durchführung des TFP-Verfahrens anbringbar ist.

2. Führungsmittel (1) nach Anspruch 1, **dadurch gekennzeichnet, dass** die Durchlassöffnung (2) zumindest abschnittsweise gekrümmt, insbesondere elliptisch, oval oder kreisförmig, ausgebildet ist.

3. Führungsmittel (1) nach Anspruch 1, **dadurch gekennzeichnet, dass** die Durchlassöffnung (2) im Wesentlichen viereckig ausgebildet ist.

4. Führungsmittel (1) nach einem der Ansprüche 1 bis 3, **dadurch gekennzeichnet, dass** eine Breite (8,14) und/oder eine Höhe (9,15) der Durchlassöffnung variierbar ist.

5. Führungsmittel (1) nach einem der Ansprüche 1 bis 4, **dadurch gekennzeichnet, dass** in Bahnkurvenabschnitten mit kleinen Krümmungsradien die Breite (8,14) der Durchlassöffnung vergrößerbar und/oder die Höhe (9,15) der Durchlassöffnung (2) verringerbar ist, um unerwünschte Aufdickungen des Faservorformlings in diesen Bahnkurvenabschnitten zu vermeiden.

6. Führungsmittel (1) nach einem der Ansprüche 1 bis 5, **dadurch gekennzeichnet, dass** in Bahnkurvenabschnitten mit großen Krümmungsradien die Breite (8,14) der Durchlassöffnung (2) verringerbar und/oder die Höhe (9,15) der Durchlassöffnung (2) vergrößerbar ist, um schneller eine bestimmte Materialstärke des Faservorformlings in diesen Bahnkurvenabschnitten zu erreichen.

7. Führungsmittel (1) nach einem der Ansprüche 1 bis 6, **dadurch gekennzeichnet, dass** die Querschnittsgeometrie der Durchlassöffnung (2), insbesondere die Höhe (9,15) und/oder die Breite (8,14) der Durchlassöffnung (2), durch Stellmittel variierbar ist.

8. Führungsmittel (1) nach einem der Ansprüche 1 bis 7, **dadurch gekennzeichnet dass** die Stellmittel durch eine Steuer- und Regeleinrichtung, insbesondere in Abhängigkeit vom aktuellen Krümmungsradius des Bahnkurvenabschnitts, steuerbar sind.

9. Führungsmittel (1) nach einem der Ansprüche 1 bis 8, **dadurch gekennzeichnet, dass** mittels der Steuer- und Regeleinrichtung die Position des Nähkopfes zur Anheftung des Faserstrangs (3) auf der Tragschicht in mindestens zwei Raumdimensionen steuerbar ist.

10. Führungsmittel (1) nach einem der Ansprüche 1 bis 9, **dadurch gekennzeichnet, dass** eine Querschnittsfläche der Durchlassöffnung (2) unabhängig von deren Breite und/oder Höhe im Wesentlichen konstant ist.

## Claims

1. Guiding means (1) for a device for producing fibre preforms for composite components in a Tailored Fibre Placement or TFP method by laying and stitching a fibre strand (3) onto a support layer with an almost arbitrary trajectory, wherein the guiding means (1) substantially serves for guiding the fibre strand (3), **characterized in that** the guiding means comprises a passage opening (2) having a variable cross-sectional geometry for leading through of the fibre strand (3), wherein the guiding means (1) is mountable in the area of a sewing head of the device for carrying out the TFP method.

2. Guiding means (1) according to claim 1, **characterized in that** the passage opening (2) is at least in sections formed curved, in particular elliptical, oval or circular.

3. Guiding means (1) according to claim 1, **characterized in that** the passage opening (2) is formed substantially quadrangular.

4. Guiding means (1) according to one of claims 1 to 3, **characterized in that** a width (8, 14) and/or a height (9, 15) of the passage opening is variable.

5. Guiding means (1) according to one of claims 1 to 4, **characterized in that** in sections of the trajectory having small radii of curvature, it is possible to increase the width (8, 14) of the passage opening and/or to reduce the height (9, 15) of the passage opening (2) in order to prevent undesirable thickening of the fibre preform in these sections of the trajectory.

6. Guiding means (1) according to one of claims 1 to 5, **characterized in that** in sections of the trajectory having large radii of curvature, it is possible to reduce the width (8, 14) of the passage opening (2) and/or to increase the height (9, 15) of the passage opening (2) in order to reach a defined material thickness of the fibre preform in these sections of the trajectory more rapidly.

7. Guiding means (1) according to one of claims 1 to 6, **characterized in that** the cross-sectional geometry of the passage opening (2), in particular the height (9, 15) and/or the width (8, 14) of the passage opening (2), can be varied by means of adjusting means.

8. Guiding means (1) according to one of claims 1 to 7, **characterized in that** the adjusting means are controllable, in particular depending on the current radius of curvature of the section of the trajectory, by means of a control and regulating device.

9. Guiding means (1) according to one of claims 1 to 8, **characterized in that** the position of the sewing head is controllable by means of the control and regulating device in at least two spatial dimensions for stitching the fibre strand (3) onto the support layer.

10. Guiding means (1) according to one of claims 1 to 9, **characterized in that** a cross-sectional area of the passage opening (2) is substantially constant independently of the width and/or the height thereof.

## Revendications

1. Système de guidage (1) pour un dispositif permettant de produire des préformes fibreuses dans le cadre d'un procédé TFP (Tailored Fiber Placement) pour des composants composites, par dépose et fixation d'un faisceau de fibres (3) sur une couche porteuse présentant une trajectoire presque quelconque, le système de guidage (1) servant essentiellement au guidage du faisceau de fibres (3), **caractérisé en ce que** le système de guidage possède une ouverture de passage (2) à géométrie de section variable permettant le passage du faisceau de fibres (3), le système de guidage (1) pouvant être monté dans la zone d'une tête de couture du dispositif de réalisation du procédé TFP.

2. Système de guidage (1) selon la revendication 1, **caractérisé en ce que** l'ouverture de passage (2) est conçue au moins par sections de façon cintrée, en particulier de façon elliptique, ovale ou circulaire.

3. Système de guidage (1) selon la revendication 1, **caractérisé en ce que** l'ouverture de passage (2) est conçue essentiellement de façon quadrangulaire.

4. Système de guidage (1) selon l'une des revendications 1 à 3, **caractérisé en ce qu'**il est possible de faire varier une largeur (8, 14) et/ou une hauteur (9, 15) de l'ouverture de passage.

5. Système de guidage (1) selon l'une des revendications 1 à 4, **caractérisé en ce que** dans les sections de trajectoire à petits rayons de courbure, il est possible d'agrandir la largeur (8, 14) de l'ouverture de passage et/ou de réduire la hauteur (9, 15) de l'ouverture de passage (2) afin d'éviter tout épaississement indésirable de la préforme fibreuse dans ces sections de trajectoire.

6. Système de guidage (1) selon l'une des revendications 1 à 5, **caractérisé en ce que** dans les sections de trajectoire à grands rayons de courbure, il est possible de réduire la largeur (8, 14) de l'ouverture de passage (2) et/ou d'agrandir la hauteur (9, 15) de l'ouverture de passage (2) afin d'éviter une certaine épaisseur de la préforme fibreuse dans ces sections de trajectoire.

7. Système de guidage (1) selon l'une des revendications 1 à 6, **caractérisé en ce qu'**il est possible de faire varier la géométrie de section de l'ouverture de passage (2), en particulier la hauteur (9, 15) et/ou la largeur (8,14) de l'ouverture de passage (2).

8. Système de guidage (1) selon l'une des revendications 1 à 7, **caractérisé en ce que** les moyens de réglage peuvent être pilotés par un dispositif de commande et de régulation, notamment en fonction du rayon de courbure existant de la section de trajectoire.

9. Système de guidage (1) selon l'une des revendications 1 à 8, **caractérisé en ce que**, au moyen du dispositif de commande et de régulation, la position de la tête de couture permettant la fixation du faisceau de fibres (3) sur la couche porteuse peut être commandée dans au moins deux dimensions spatiales.

10. Système de guidage (1) selon l'une des revendications 1 à 9, **caractérisé en ce qu'**une surface de section de l'ouverture de passage (2) est sensiblement constante indépendamment de sa largeur et/ou de sa hauteur.
